# EUROPEAN PATENT SPECIFICATION

(11) **EP 3 890 300 B1**
(45) Date of publication and mention of the grant of the patent: **25.01.2023**
(21) Application number: 20382269.7
(22) Date of filing: 03.04.2020
(51) Int. Cl.: H04N 5/225, H04N 5/235, G01C 21/20

(54) **A SELF-PROPELLED VEHICLE**
SELBSTANGETRIEBENES FAHRZEUG
VÉHICULE AUTOPROPULSÉ

(43) Date of publication of application: 06.10.2021
(73) Proprietor: UAV AUTOSYSTEMS HOVERING SOLUTIONS ESPAÑA, S.L., 28050 Madrid, Madrid (ES)
(72) Inventor: ESPADA MORENO, Francisco José, 28035 Madrid (ES)
(74) Representative: Elion IP, S.L.

(56) References cited:
- WO-A1-2019/084595
- WO-A1-2020/014706
- US-A1- 2017 083 748
- US-A1- 2018 143 018
- US-A1- 2018 348 764
- MUELLER K ET AL: "Combination of Wide Baseline Image Matching and Tracking for Autonomous UAV Approaches to a Window", GYROSCOPY AND NAVIGATION, PLEIADES PUBLISHING, MOSCOW, vol. 10, no. 4, 1 October 2019 (2019-10-01), pages 206-215, XP037006472, ISSN: 2075-1087, DOI: 10.1134/S2075108719040138 [retrieved on 2020-02-03]

## Description

### TECHNICAL FIELD

The present invention relates in general to the field of self-propelled vehicles and, more specifically, to the field of navigation of self-propelled vehicles.

### STATE OF THE ART

Systems which aid in navigation of self-propelled vehicles, and more specifically in navigation of autonomous self-propelled vehicles are known in the art. Some of these systems allow navigation in the darkness (e.g. in an underground mine without lighting). However, most of these systems are not applicable to small, light-weight vehicles such as aerial drones for indoor inspection.

Kauhanen, H. 2008, 'Close range photogrammetry - Structured light approach for machine vision aided harvesting' ISPRS Archives, vol. XXXVII, part B5, pp. 75-80 (hereinafter referred to as "Kauhanen") discloses a machine vision aided harvester having two cameras and a projector. The projector projects pulses of patterned NIR light on a tree and the cameras capture images of the portion of the tree onto which the light pulses are projected. A spectral filter allows differentiating the patterned light in the captured image, which is in a binary form, more specifically in black and white. Since the orientation of the cameras is known, an image of the same target taken with the two cameras can be used for photogrammetric measurement tasks. In this way, by taking an image of the same target with two cameras synchronously, the resulting data could be used for photogrammetric measurement tasks, allowing the measuring of characteristics of an individual tree prior to touching it. The use of a database of cut trees is advantageous for planning the subsequent harvesting events. However, the patterned light disclosed in Kauhanen does not allow tracking objects onto which the patterned light is projected as the projector would follow the vehicle movement, changing the location of the source of light projecting the patterned light from one frame to the next one. As a result of the change of location of the source of light the same object may look very different in different frames, hindering the tracking of the object. In addition, Kauhanen discloses the use of patterned light in combination with the use of two cameras. The machine vision aided harvester in Kauhanen requires multiple (more than one) cameras for capturing the same image from different points of view at the same time. In addition, if the machine aided vision system disclosed in Kauhanen were implemented in a small vehicle (e.g. a small drone or similar) the distance between the cameras would be limited to just a few centimetres and consequently, the field of depth would be limited to a very close range. This limitation would make the navigation of the vehicle within large spaces impossible, e.g. spaces where the distance from the small vehicle to the closest wall of a chamber is about ten times the distance between the cameras.

WO2019/084595A1 discloses a system and a method for improving signal to noise ratio in object tracking under poor light conditions. WO2020/014706A1 discloses a visual navigation for mobile devices operable in differing environmental lighting conditions. US2017/083748A1 discloses a system and a method for detecting and tracking movable objects. US2018/348764A1 discloses a system and a method for providing easy-to-use release and auto-positioning for drone applications. US2018/143018A1 discloses a distance sensor projecting parallel patterns. Mueller K et al: "Combination of Wide Baseline Image Matching and Tracking for Autonomous UAV Approaches to a Window", GYROSCOPY AND NAVIGATION, PLEIADES PUBLISHING, MOSCOW, vol.10, no.4, 1 October 2019 (2019-10-01), pages 206-215, XP037006472 discloses a combination of wide baseline image matching and tracking for autonomous UAV approaches to a window.

### DESCRIPTION OF THE INVENTION

An aspect of the invention relates to a self-propelled vehicle as set out in claim 1. Another aspect of the invention relates to a method as set out in claim 12.

A first aspect of the invention relates to a self-propelled vehicle, preferably to a small light-weight vehicle such as for example an aerial drone for indoors inspection, comprising:
- a light emitting device for emitting light pulses, such as pulses of visible light and/or pulses of infrared light; and
- an imaging device comprising a shutter; wherein
- the light emitting device is coordinated with the shutter of the imaging device, such that an image is captured by the imaging device during at least part of the duration of a light pulse, such as during at least 25%, 50%, 75%, 90%, or 100% of the duration of a light pulse, preferably during all of the light pulses or during a majority of the light pulses.

According to this first aspect:
- the light emitting device is configured to emit light pulses wherein each light pulse has a duration of less than 5000 µs, for example of less than 4000, 3000, 2000 or 1000 µs, although preferably of more than 10, 15, 20 or 25 µs.

A combination of light pulses having a duration of less than 5000 µs with a shutter speed high enough to avoid or sufficiently reduce image blur, for example with exposure times of less than 120, 100, 80 or 60 µs although preferably of more than 10, 15, 20 or 25 µs, has been found to be advantageous. This combination guarantees that the images captured, while the self-propelled vehicle is moving in the darkness, have low blur and fuzziness (that is, the images are clear and sharp), so that the images can be processed in image matching based applications. Using light pulses of low duration also serves to minimize the energy consumption corresponding to the operation of the light source, something that may be especially advantageous in the case of small aerial vehicles. It also serves to minimize the generation of heat, which is sometimes also an advantage to minimize overheating of components, particularly of electronic components, and more particularly of the sources of light pulses. It is particularly advantageous to minimize overheating of electronic components of a small aerial vehicle, which cannot be as distant from the sources of light pulses as in bigger vehicles and cannot use certain heat dissipators which may be used in vehicles in which the requirements of low weight and small size are not as critical as in the case of small aerial vehicles. It is expected that future improvements of image sensors will allow, in some embodiments of the invention, that the exposure time be lower than 10 µs.

In some embodiments, each light pulse has a duration of less than 4000, 3000, 2000 or 1000 µs. This way the self-propelled vehicle generates less heat per light pulse and, hence, can emit more light pulses in the same amount of time. This allows increasing the performance from the point of view of positioning estimation and provides enhanced navigation capabilities.

In some embodiments, each light pulse has a duration of between 20 and 2000 µs. In some of these embodiments, each light pulse has a duration of between 20 and 50 µs. The duration of between 20 and 50 µs has been found to be particularly advantageous during most of the time of navigation based on close-range photogrammetry (e.g. typical in indoors navigation) because very little energy is consumed in the generation of light pulses and at the same time the images captured while the self-propelled vehicle is moving in the darkness have low blur and fuzziness (that is, the images are clear and sharp), so that the images can be processed in image matching based applications.

In some embodiments, the self-propelled vehicle is configured to adapt the duration of the light pulses, during movement of the self-propelled vehicle, to light reflected by objects located within the field of view of the imaging device, the duration being adapted according to at least one image of the objects previously captured by the imaging device. In this way if an object being shown in an image is so bright that it implies a loss of detail in the captured image, the duration of the following light pulse may be reduced in order to decrease the amount of light that reaches the imaging device, hence decreasing the brightness of the objects shown in the captured image during said following light pulse. Thereby, the amount of light reflected by the objects and detected by an image sensor of the imaging device may be adapted in real time. The amount of light reflected by the objects depends on parameters such as light reflectivity of the target surface of the objects, amount of natural light (if any) and distance from the object to the image sensor of the imaging device. Preferably the aperture and the gain of the imaging device are kept constant.

In some embodiments, each light pulse is initiated at almost the same time as an exposure time is initiated, such that a difference in time between initiation of a light pulse and initiation of the exposure time is of less than 5, 2 or 0.5 µs. In some of these embodiments or in other embodiments, each light pulse ends at almost the same time as the exposure time ends, such that a difference in time between the end of a light pulse and the end of the exposure time is of less than 5, 2 or 0.5 µs, which can be achieved for example by means of ending the exposure time once light sensors of the imaging device receive an amount of light per unit of time lower than a particular threshold. In some embodiments, the light pulse is initiated at the same time as the exposure time is initiated and/or the light pulse ends at the same time as the exposure time ends. This presents the advantage of making the most of the light pulses because light emitted outside the exposure time, although reaching the imaging device, is not detected by the image sensor of the imaging device.

In some embodiments, the shutter is synchronized with at least some of the light pulses emitted by the light emitting device and preferably with all the light pulses emitted by the light emitting device. In these embodiments, synchronization between a light pulse and the shutter means that:
- each light pulse is initiated at the same time as an exposure time is initiated, and
- the light pulse ends at the same time as the exposure time ends.

An advantage of a shutter synchronized with all the light pulses emitted by the light emitting device is that one image is captured for each light pulse, decreasing the energy consumed by the light-emitting device and the heat generated by said device.

During a regular operation of the self-propelled vehicle, the light pulses of low duration present a low duty cycle. In some embodiments, the self-propelled vehicle is configured to emit light pulses with a duty cycle of between 0.05% and 10%. In some embodiments, the duty cycle is of less than 10%, 5%, 1% or 0.5%. It has been found advantageous to use during most of the time of navigation based on close-range photogrammetry in the darkness (e.g. typical in indoors navigation) a duty cycle of between 0.1% and 0.3%, and more specifically of 0.2% (e.g. 50 pulses per second, each pulse having a duration of 40 µs). In this way, the light emitting device generates less heat and has plenty of time to dissipate said heat. In addition, the light emitting device requires less energy for illumination. In addition, lower heat dissipation and lower illumination power requirements enable the use of smaller components having lower weight, which is advantageous, particularly in the field of small vehicles and in the field of flying vehicles. Since the light emitting device emits light pulses, the light emitting device is subjected to cyclical heating (i.e. while the light emitting device is emitting a light pulse) and cooling (i.e. while the light emitting device is not emitting a light pulse). It is advantageous that the duration of the light pulses be notably shorter than the length of time between two consecutive light pulses (i.e. the length of time during which the light emitting device does not emit light). Thereby the light emitting device has more time to dissipate heat that has been generated by a light source during the emission of a light pulse.

In some embodiments, the imaging device is configured to capture at least 50 frames or images per second. In other words, the imaging device is configured to work at a frame rate of at least 50 frames per second. In some of these embodiments, the imaging device is configured to capture one of: at least 60, 70, 80, 90 or 100 frames per second, depending on the application to which the frames are subjected.

A low duration of the light pulses emitted by the light emitting device allows a high rate of frames per time because the light emitting device has enough time to cool between two consecutive light pulses. In addition, a high rate of frames per time contributes to decreasing lighting and exposure changes between images captured while the self-propelled vehicle is moving. In this way, a high amount of matches between captured images can take place. This causes an increase of efficiency in the image matching, and hence improves the performance in photogrammetry and/or computer vision algorithms, reducing the computing times. These features make the real-time processing of the information possible, which is an advantageous feature in the context of the navigation of self-propelled vehicles. Therefore, this increase in efficiency allows improving navigation of the self-propelled vehicle.

In some embodiments, the image matching is performed on images captured in a row (one after each other). Thereby, images processed in the image matching based applications present lower changes in lighting and exposure, which increases matches in the image matching and, in particular, allows identification of more tie points, as in consecutive images more objects shown in different images are common to more than one of said different images and hence more reference points can be used to position the self-propelled vehicle with respect to said objects.

In some embodiments, the self-propelled vehicle is configured to be guided according to the relative positions between a first plurality of tie points of an image captured by the imaging device and a second plurality of tie points of another image captured by the imaging device, wherein the first plurality of tie points are visual representations of locations of the surroundings of the self-propelled vehicle and the second plurality of tie points are visual representations of the locations of the surroundings of the self-propelled vehicle represented by the first plurality of tie points. In some of these embodiments each of the two images have been consecutively captured.

In some embodiments, the self-propelled vehicle is configured to perform matching of tie points present in different images, wherein the tie points preferably are identifiable within images captured during pulses of unpatterned light. The use of tie points in image matching for navigation of the self-propelled vehicle has been found to be particularly advantageous because it allows real-time navigation; in other embodiments, other methods of processing of the images may be used. In some embodiments, the tie points of the images correspond to features of objects, which are located within the field of view of the imaging device while the image is being captured, illuminated with pulsed but unpatterned light. Therefore, images captured by the imaging device are not as distorted with respect to reality as if the light emitted by the light emitting device were patterned.

In some embodiments the light emitting device is configured to project unpatterned light, that is light devoid of any shaped pattern such as circle(s), line(s), square(s) and/or any other shape(s). In some embodiments, the light emitting device is configured to project light devoid of any graphic form intended to be captured in full or in part by the imaging device. These embodiments are advantageous in the sense that patterned light or light comprising a graphic form may obscure details of the surroundings of the self-propelled vehicle in images captured by the imaging device. Therefore, the projection of patterned light or light comprising a graphic form may undesirably hinder a process of positioning the self-propelled vehicle, with respect to its surroundings, based on the images.

In some embodiments, the shutter of the imaging device is a global shutter. In other embodiments, the shutter is a rolling shutter, provided that the rolling-shutter effect present in the captured images is appropriately taken into account (e.g. avoided or corrected). At the time of drafting the present application, in the context of the present invention, a rolling shutter results disadvantageous when compared to a global shutter because the global shutter requires less time to capture an image (i.e. a lower exposure time) and hence less time of illumination by the light emitting device is required and a higher rate of frames per time can be achieved. Therefore, rolling shutters are disadvantageous with respect to global shutters due to their lower energy efficiency and their prejudicial effect to real-time triangulation. However, a global shutter is significantly more expensive than a rolling shutter, and rolling shutters and their related software are nowadays improving to deal with the rolling-shutter effect, so in the near future rolling shutters may be advantageous in the context of the present invention. In spite of this, the capture of images for navigation based on close-range photogrammetry (e.g. typical in indoors navigation) does not require a high-resolution global shutter, which is significantly more expensive than a low-resolution global shutter.

In some embodiments, the imaging device is configured to convert light to electrical signals without using any electrical amplifier to provide gain in the conversion, more particularly without using any electrical amplifier to provide gain to image signals generated by light sensors of the imaging device. The use of light pulses of high power avoids the need for electrical amplifiers associated to the light sensors of the imaging device. The light pulses of high power may be generated by means of supplying pulses of high electric power to the light emitting device. The average electric power, which includes the electric power converted into heat due to lighting, supplied to the light emitting device in each light pulse of high power may be of, for example, at least 70, 150, 300 or 400 W. In some of these embodiments, less than 35%, 30% or 25% of the average electric power of each pulse of high electric power is converted into heat. The electrical amplifiers are normally used to provide gain in the conversion of light to electrical signals in the image sensors. The purpose of the amplifiers is to artificially increase the brightness and exposure of an image, particularly when the image is taken in the darkness. However, the use of amplifiers (image gain or ISO in traditional photography) produces noise in the image, distorting the pixel colour and consequently negatively affecting the image matching. Due to the high power of the light pulses, the system reduces the image noise and improves the image matching, increasing the reliability of the vehicle positioning and navigation, as well as the quality of the 3D models of the imaged surfaces produced using photogrammetry techniques.

In some embodiments, the imaging device comprises an image sensor comprising an array of sensors of light and the imaging device is configured to bin adjacent sensors of light of the array of sensors of light for reducing pixel resolution of a captured image, in the sense that the imaging device is configured to combine the information detected by adjacent sensors of light of the image sensor (or the information detected by adjacent pixels of the image sensor) in order to create one single pixel in the captured image. This is advantageous in the sense that the same image sensor can be used to capture images with low pixel resolution and images with higher pixel resolution. In some of these embodiments, the same image sensor is used both for capturing low resolution images for navigation purposes and for capturing full resolution images intended to be used in post-processing tasks. Therefore, in these embodiments a single image sensor may be used. Low resolution images may be greyscale images in order to allow a quick processing of the low resolution images and, at the same time, to allow taking advantage of the sensitivity of the image sensor. Full resolution images captured by the same image sensor may be colour images. In the context of the present invention, a full resolution image is an image captured without binning adjacent sensors of light.

In order to capture low resolution images, adjacent sensors of light of the image sensor are preferably binned, for example in 4x4 matrixes. A purpose of this binning is to increase the sensitivity of the image sensor by increasing the area of each pixel of the image, reducing the amount of light per sensor of light required for capturing an image, hence reducing the exposure time and the energy consumption and heat generation of the overall system. Thereby binning allows capturing more images in the same amount of time. In addition, binning allows keeping the same field of view. Therefore, since the number of pixels composing an image is reduced by means of binning, the processing of the images for identification of tie points and for matching with other images is quicker than if the same processing were to be applied to a full resolution image. This allows increasing the performance of the image matching algorithms and allows reducing the time required between the capture of an image and the calculation of a position of the self-propelled vehicle according to the image matching, which is advantageous for a proper vehicle navigation. In some of these embodiments, the low resolution image, valid for navigation purposes, is expected to have a resolution lower than 1 mega pixel. In some embodiments, colour information of pixels of an image, apart from grey scale tones, is not used in the processing of images for navigation purposes.

In some embodiments, the same image sensor is used to capture full resolution images (e.g. at nominal sensor resolution, normally above 5 mega pixels) removing the binning of sensors of light when necessary. The full resolution image may be subjected to further post-processing after the self-propelled vehicle concludes a mission, for example, a mission of inspection of a tunnel.

In some embodiments, an onboard processing unit may be configured to measure an amount of surface overlap, that is an amount of overlap of image area, between the most recently captured full resolution image and the most recently captured image. When an overlap threshold between the most recently captured full resolution image and the most recently captured image is reached (a threshold normally determined by the user according to the application) the binning of the sensors of light may be removed, capturing a full resolution image which may be saved on an onboard memory. In these embodiments higher resolution images can be used instead of full resolution images. This method ensures an overlap between full resolution images (or higher resolution images when higher resolution images are captured instead of full resolution images), which is advantageous to produce high resolution photogrammetric 3D models from the full resolution images. In addition, this method allows minimizing the amount of images having full resolution which are captured, reducing the energy consumed by the self-propelled vehicle, since capturing a higher resolution image consumes more energy than capturing a low resolution image. In addition, this low/high resolution switching technique integrates two features, namely, the generation of images for navigation and the generation of images for full resolution in 3D modelling, using the same image sensor, reducing the weight and cost of the self-propelled vehicle and increasing its 3D modelling capabilities.

In some embodiments, the light emitting device also emits pulses (or a pulse) of light, wherein each pulse of light has a duration of at most 20000 µs. These pulses (or pulse) having a higher duration are emitted after or before sequences of pulses wherein each pulse has a duration of less than 5000 µs. The pulses having a higher duration, unlike the pulses having a duration of less than 5000 µs, have been found typically unsuitable for positioning the vehicle, through image matching based applications, during navigation. The pulses having a higher duration are suitable for capturing images having a higher resolution, which are suitable for 3D modelling.

In some embodiments, the light emitting device illuminates the field of view of the imaging device uniformly while the image is being captured. In this way, the image matching relies on objects shown in the images, the objects being inherently present in the surroundings of the self-propelled vehicle and are not artificially created by the self-propelled vehicle, for example by means of projecting patterned light.

In some embodiments, the light emitting device comprises a light diffuser. The lower weight and space requirements of the components destined to emit light, enable the introduction of additional components in the self-propelled vehicle such as a light diffuser, without unsuitably exceeding the weight and/or space requirements of the self-propelled vehicle. A light diffuser is advantageous because it causes the imaging device to be exposed to light with enhanced uniformity, decreasing areas of the image sensor which are overexposed and hence subjected to an excess of light which causes loss of detail in the captured images. The light diffuser is particularly advantageous in some embodiments of the present invention in which the light source of the light emitting device is much smaller than the field of view of the imaging device. In this way, the light diffuser may minimize overexposure of areas represented in an image which, during the capture of the image, are close to a light source. In this way, in cases in which the area represented in a central portion of an image is closer to the light source than the rest of the areas represented in the image, overexposure of the central portion may be minimized by means of the light diffuser. In addition, this enhanced uniformity decreases changes of shades, lighting and exposure between different captured images, which increases performance of the image matching. This enhanced uniformity is particularly advantageous in the field of close-range imaging, for example when the vehicle is approaching an obstacle intended to be dodged.

In some embodiments, the light-emitting device is configured to emit light pulses which illuminate the way ahead of the self-propelled vehicle and, at the same time, the field of view of the imaging device.

In some embodiments, the imaging device comprises an imaging lens, and the light emitting device comprises a plurality of light sources, each light source oriented in a direction which forms an angle of between 35° and 55°, such as between 40° and 50°, such as 45° with respect to the optical axis of the imaging lens of the imaging device. In this way, the field of view of the imaging device is subjected to light with enhanced uniformity. In addition, in this way, particles suspended in the air are less likely to appear on images because the shadows of said particles, generated due to the light pulses are minimized, improving the quality of the image captured by the imaging device.

In some embodiments, the self-propelled vehicle is propelled by means of propellers (e.g. a quadrotor) and the source of light (e.g. LED or LEDs) of the light-emitting device is/are placed near the propellers, such that dissipation of heat from the source of light is improved.

In some embodiments, the self-propelled vehicle is preferably a relatively small self-propelled vehicle, such as a self-propelled vehicle with a size that allows the self-propelled vehicle to be housed in a cube having sides with a length of less than 1 m, such as less than 50 cm, and/or with a weight of less than 4 kg, such as less than 2 kg.

According to another aspect of the invention, the invention relates to a method of capturing images of a target from a self-propelled vehicle, the method comprising:
- emitting light pulses towards the target, wherein each light pulse has a duration of less than 5000 µs, such that a target located in the darkness is intermittently illuminated by the light pulses, and
- capturing images of the target,
wherein the step of capturing images of the target is coordinated with the light pulses emitted towards the target such that an image is captured during at least part of the duration of a light pulse.

In some embodiments, the method further comprises the step of calculating vehicle positioning information for providing guiding instructions to the self-propelled vehicle, wherein the step of calculating vehicle positioning information comprises processing the captured images according to an image matching algorithm and, preferably, Kalman filtering. In this way, the self-propelled vehicle can react to obstacles of its surroundings by adjusting the guiding instructions and hence its future movement. Preferably, these steps are performed onboard the vehicle to which the guiding instructions are destined, such that the vehicle can be guided in scenarios where satellite-based geolocation is denied.

The different aspects and embodiments of the invention defined in the foregoing can be combined with one another, as long as they are compatible with each other.

Additional advantages and features of the invention will become apparent from the detailed description that follows and will be particularly pointed out in the appended claims.

### BRIEF DESCRIPTION OF THE DRAWINGS

To complete the description and in order to provide a better understanding of the invention, a set of drawings is provided. Said drawings form an integral part of the description and illustrate embodiments of the invention, which should not be interpreted as restricting the scope of the invention, as defined in the appended claims, but just as an example of how the invention can be carried out. The drawings comprise the following figures:
Figure 1 is a perspective view of a schematic representation of an imaging device of a self-propelled vehicle according to an embodiment of the present invention, wherein the imaging device holds PCBs.
Figure 2 is a perspective view of an imaging device and of a light emitting device of a self-propelled vehicle according to an embodiment of the present invention.
Figure 3 is a schematic representation illustrating an example of operation of several components of a self-propelled vehicle according to an embodiment of the present invention.
Figure 4 shows a first example of lighting power pulses of a light emitting device applied to a light source (top) and trigger voltage pulses applied to a high-speed trigger unit (bottom) for triggering the lighting power pulses; the lighting power pulses recurring at the same period as the trigger voltage pulses; the light emitting device and the high-speed trigger unit being part of a self-propelled vehicle according to an embodiment of the present invention.
Figure 5 shows a second example of lighting power pulses of a light emitting device applied to a light source (top) and trigger voltage pulses applied to a high-speed trigger unit (bottom) for triggering the lighting power pulses; the lighting power pulses recurring at the same period as the trigger voltage pulses; the light emitting device and the high-speed trigger unit being part of a self-propelled vehicle according to an embodiment of the present invention.
Figure 6 shows a third example of lighting power pulses of a light emitting device applied to a light source (top) and trigger voltage pulses applied to a high-speed trigger unit (bottom) for triggering the lighting power pulses; the lighting power pulses recurring at the same period as the trigger voltage pulses; the light emitting device and the high-speed trigger unit being part of a self-propelled vehicle according to an embodiment of the present invention.
Figure 7 shows an example of a lighting power pulse of a light emitting device applied to a light source (top) and a trigger voltage pulse applied to a high-speed trigger unit (bottom) for triggering the lighting power pulse; the light emitting device and the high-speed trigger unit being part of a self-propelled vehicle according to an embodiment of the present invention.
Figure 8 is a schematic representation of a first image captured with the imaging device of a self-propelled vehicle according to an embodiment of the present invention.
Figure 8A shows the schematic representation of figure 8 wherein exemplary tie points for image matching applications are marked.
Figure 8B shows the greyscale image with green tie points represented in figure 8A.
Figure 9 is a schematic representation of a second image captured with the imaging device of a self-propelled vehicle according to an embodiment of the present invention.
Figure 9A shows the schematic representation of figure 9 wherein exemplary tie points for image matching applications are marked.
Figure 9B shows the greyscale image with green tie points represented in figure 9A.
Figure 10 shows a self-propelled vehicle according to an embodiment of the present invention.

### DETAILED DESCRIPTION OF EMBODIMENTS

The following description is not to be taken in a limiting sense but is given solely for the purpose of describing the broad principles of the invention. Embodiments of the invention will be described by way of example, with reference to the above-mentioned drawings.

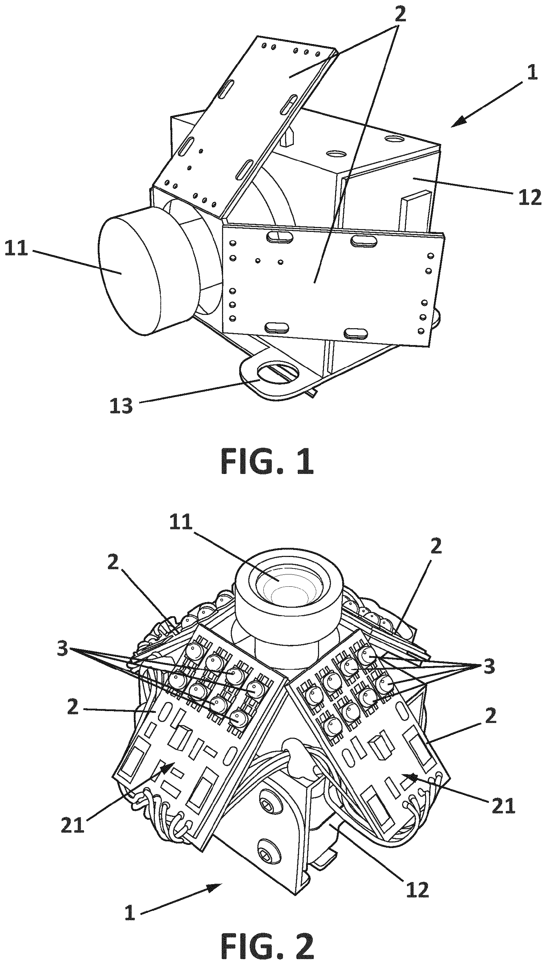

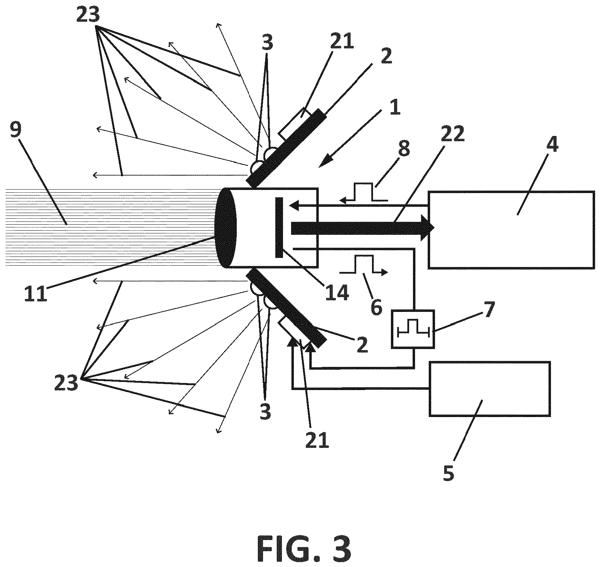

Figure 1 discloses an imaging device 1 comprising a housing 12. The housing 12 of the imaging device 1 may have a front side, a rear side, an upper side, a lower side and two lateral sides. A lens, preferably a fixed-focus lens 11, of the imaging device 1 may be arranged on the front side of the imaging device 1. The housing 12 of the imaging device 1 houses an image sensor 14 (schematically shown in figure 3), this way the housing protects the image sensor 14 from the environment and from vibrations that may occur during navigation of the self-propelled vehicle. The housing 12 of the imaging device 1 comprises vehicle attaching means 13 for attaching the housing 12 of the imaging device 1 to a portion of a self-propelled vehicle. Preferably, the vehicle attaching means 13 are located on the rear side and/or the upper side and/or the lower side of the housing 12 of the imaging device 1.

In addition, the housing 12 of the imaging device 1 may hold four PCBs 2. Figure 1 shows just two of these four PCBs 2, the other two PCBs 2 may be arranged around the fixed-focus lens 11 such that the four PCBs 2 are uniformly distributed around the fixed-focus lens 11, such that the angular distance between a PCB 2 and the closest PCB 2 hold by the housing 12 is 360°/4 = 90°. Since light sources are intended to be mounted on the PCBs 2, a uniform distribution of the PCBs 2 around the fixed-focus lens 11 is advantageous because in this way the light sources may be easily distributed in a uniform manner around the fixed-focus lens 11, such that the field of view of the fixed-focus lens 11 is illuminated with light with enhanced uniformity.

In other embodiments the housing 12 of the imaging device 1 holds N PCBs 2, where N>4. The N PCBs 2 are preferably uniformly distributed around the fixed-focus lens 11 as explained above, such that the angular distance between a PCB 2 and the closest PCB 2 is 360°/N.

In addition, it is advantageous that the PCBs 2 are located outside of the field of view of the imaging device 1. Thereby the imaging device 1 is able to capture more details of the surroundings of the self-propelled vehicle in order to improve performance of the image matching algorithms.

Preferably, the PCBs 2 are attached to the housing 12 of the imaging device 1 such that the PCBs 2 are not in direct contact with the housing 12. Thereby less heat generated by the light sources is transferred to the housing 12 of the imaging device 1. More preferably, most of the surface of each PCB 2 is uncovered in order to improve heat dissipation. This is particularly advantageous because, while the self-propelled vehicle is moving, more heat is transferred to the air by means of convection.

Continuing with figure 1, each PCB 2 may be suitable for mounting light sources such as a plurality of LEDs (for example, from four to sixteen LEDs) for illuminating the field of view of the imaging device, rather than LEDs having a lower lighting power such as LEDs for mere signalling purposes. For example, the light sources may comprise a plurality of high-power LEDs such as a plurality of LEDs wherein each LED is able to withstand a nominal current of at least 1, 2 or 3 A and/or an electric power of at least 3, 5 or 10 W. Preferably, each PCB 2 defines a plane which forms an angle of 45° with respect to the optical axis of the fixed-focus lens 11. Each PCB 2 may be thermally optimized, including heat transfer paths between PCB 2 layers and large copper areas in order to reduce the thermal resistance between LEDs junction and air.

As shown in figure 2, the LEDs 3 may be arranged around the fixed-focus lens 11 in a uniform manner. This way, the LEDs 3 may be mounted on several PCBs 2, uniformly arranged around the lens 11, for example on four PCBs 2. The LEDs 3 of each PCB 2 may be arranged as close as possible to the border of the PCB 2 which is closest to the fixed-focus lens 11. On each PCB 2, eight LEDs 3 may be arranged in parallel rows of four LEDs 3 each. In order to improve identification of tie points, the light emitted by the LEDs 3 may be diffused. All the LEDs 3 may emit visible light having the same colour. In order to improve identification of tie points, the light emitted by the LEDs 3 may be diffused light. As shown in figure 2, the plane defined by each PCB 2 may form an angle of 45° with respect to the optical axis of the lens 11.

As shown in figure 2, LEDs 3 (or other light sources) may be arranged such that each LED 3 is oriented perpendicularly to the plane defined by the PCB 2 on which it is mounted, this way the LEDs 3 can be oriented forming an angle of 45° with respect to the optical axis of the fixed-focus lens 11. In figures 1 and 2, the LEDs 3 are located in the front side of the housing 12 of the imaging device 1, that is, in the side of the imaging device 1 wherein the fixed-focus lens 11 is located. Preferably, the LEDs 3 are located slightly behind the fixed-focus lens 11 (this can be more easily appreciated in figure 3). This does not preclude other embodiments (not shown) in which additional light sources (such as LEDs 3) are arranged in other positions with respect to the fixed-focus lens 11 (for example, in the rear side of the housing 12 of the imaging device 1, preferably facing a direction which is opposite to the direction faced by the fixed-focus lens 11) such that light travels more indirectly because it is reflected more times on objects surrounding the self-propelled vehicle.

As shown in figure 3, a high-speed trigger unit 21 may be mounted on each PCB 2. The high-speed trigger unit 21 switches on and off the LEDs 3 mounted on the same PCB 2. The high-speed trigger unit 21 has electronic means which send a lighting power pulse for lighting to the LEDs 3. The lighting power pulse is started upon reception by the high-speed trigger unit 21 of a signal and ended upon reception by the high-speed trigger unit 21 of another signal, preferably upon reception of low power signals such as TTL signals. The lighting power pulse may be of less than 6, 5 or 4 A although preferably of more than 0.5, 1 or 2 A of average current. The high-speed trigger unit 21 has a quick response, this means that the high-speed trigger unit 21 requires just a little time between reception of a signal and the starting or ending of a corresponding lighting power pulse, for example requires a time of less than 5, 2 or 0.5 µs. This may be achieved through means of minimization of electric interference between the part of the high-speed trigger unit 21 for sending a lighting power pulse and the part of the high-speed trigger unit 21 for processing the signal received by the high-speed trigger unit 21. The quick response is advantageous in embodiments in which the exposure time is ended just before the high-speed trigger unit 21 receives a corresponding signal for ending a lighting power pulse, because in this way it is minimized the amount of time that the lights remain switched on outside the exposure time. In some of these embodiments in which a quick response is advantageous, a signal for ending a lighting power pulse is generated by the imaging device 1, for example a signal consisting in a sudden voltage reduction, and sent to the high-speed trigger unit 21 when the image sensor of the imaging device 1 has concluded an exposure time previously fixed by a processing unit 4 to which the imaging device 1 is connected. In other embodiments (not shown) light sources different from LEDs 3 may be used, said light sources must respond quick enough to signals controlling the emission of light pulses and preferably be as efficient as possible in order to consume just a little energy, particularly while a light pulse is being emitted.

A power source 5, such as a lithium-ion battery, for providing lighting energy to the LEDs 3 may be connected to the high-speed trigger units 21 of the LEDs 3. In addition, the high-speed trigger units 21 may be connected to an image sensor, such as a global shutter image sensor 14 (e.g. a CMOS image sensor) having high sensitivity to light and quickly responding to signals which trigger a capture of an image. For the sake of conciseness figure 3 depicts said connections just with the PCB 2 located in the lower half of the shown imaging device 1, but it can be understood that there may be similar connections between the other PCBs 2, their high-speed trigger units 21, the image sensor 14 and the power source 5. The power source 5 provides the energy required for emission of light pulses by the LEDs 3.

Part of the light pulses emitted by the LEDs 3 may be reflected, for example it may be reflected by the walls of an underground cavern into which the self-propelled vehicle is navigating, and then the light pulses may go through the lens 11 arriving at the image sensor 14. The image sensor 14 may be connected to a processing unit 4 which is onboard the self-propelled vehicle. The processing unit 14 may be configured to send a trigger pulse 8 to the image sensor 14 for triggering a capture of an image. This way, the processing unit 4 controls the activation of the shutter of the imaging device 1 and may set the exposure time, although preferably the trigger pulse 8 triggering the image capture just initiates a capture of an image, the duration of the trigger pulse 8 (or the width of the trigger pulse 8) not providing information to the shutter about the duration of the exposure of time of the capture of an image. Preferably, the image sensor 14 is automatically deactivated when the image sensor 14 stops receiving light.

Upon reception of a trigger pulse 8 triggering a capture of an image, the global shutter image sensor 14 may send trigger pulses 6 to a high-speed trigger unit 21 of the LEDs 3. Upon reception of the trigger pulses 6, the high-speed trigger unit 21 may cause that the power source 5 provides a lighting power pulse to LEDs 3 for emission of light pulses by the LEDs 3. Preferably, the duration (or width) of each trigger pulse 6 received by the high-speed trigger unit 21 may determine the duration of the lighting power pulse caused by the high-speed trigger unit 21, and hence the duration of the light pulse. In order to prevent an excessive heating of the LEDs 3 produced due to an excessive duration of a trigger pulse 6, a pulse-duration limiter 7, aka a pulse-width limiter, may be arranged between the image sensor 14 and the high-speed trigger unit 21 of the LEDs 3.

The path 23 of the light pulses followed by the light pulses leaving the LEDs 3 before the light pulses are deviated by the surroundings of the self-propelled (e.g. refracted or reflected by objects of the environment surrounding the self-propelled vehicle) is schematically represented in figure 3. Preferably, this path 23 does not enter a central volume 9 of the field of view of the imaging device 1, the central volume 9 extending from the fixed-focus lens 11 parallel to the optical axis of the fixed-focus lens 11.

In a capture of an image, light detected by the image sensor 14 is converted to electrical signals 22 which define a raw image. The raw image is transmitted to the processing unit 4, for example through a high-speed data bus. It may be advantageous that the raw image is not compressed, so that the raw image keeps details which would disappear if the raw image were compressed. The processing unit 4 may be configured to process the raw images received from the image sensor 14. For example, the processing unit 4 may be configured to identify tie points in subsequent raw images during movement of the self-propelled vehicle in order to determine the trajectory followed by the self-propelled vehicle with respect to its surroundings and correct its trajectory, for example, in order to avoid crashing with its surroundings. The processing unit 4 may be configured to, upon analysing the raw images (e.g. upon performing image matching on the raw images), adapt the rate of images per time. The processing unit 4 may be configured to, upon analysing the raw images captured (e.g. upon performing image matching on the raw images), adapt the pixel binning of the imaging device 1. The processing unit 4 may be configured to, upon analysing the raw images captured (e.g. upon performing image matching on the raw images), adapt the exposure time and/or the duration of the light pulses in the subsequent capture of an image or images.

The processing unit 4 may be configured to save full resolution images and/or higher resolution images in an onboard memory different from an onboard memory in which images having lower pixel resolution are saved.

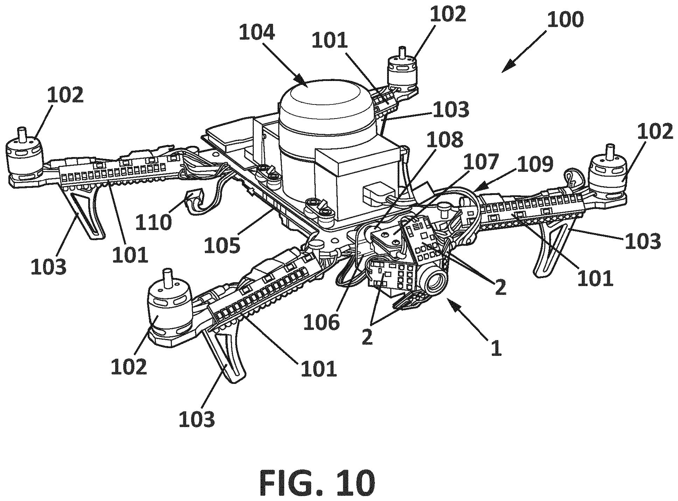

Figure 10 discloses an exemplary self-propelled vehicle 100, more specifically an aerial drone, comprising the imaging device 1 shown in figure 2. The aerial drone 100 comprises four arms, each arm having an electric motor 102 arranged on top of it and near the end of the arm. Each electric motor 102 may be coupled to a blade forming in this way a propeller.

The light emitting device 1 of the self-propelled vehicle 100 comprises light sources, such as LEDs, arranged along each arm of the self-propelled vehicle 100. Thereby, the self-propelled vehicle 100 has the advantage that both lighting power and lighting uniformity are enhanced. For the purpose of enhancing even more the lighting uniformity, it is advantageous that the arms have different orientation (i.e. that the arms are not parallel to each other). Figure 10 discloses all four arms having light sources, but in other embodiments less arms may have light sources. In other different embodiments the self-propelled vehicle 100 may have more than four arms, in some of these embodiments light sources extend along each arm whereas in others of these embodiments light sources extend along just some of the arms.

As shown in figure 10, the light sources preferably face the side of the aerial drone 100 towards which the field of view of the imaging device 1 is oriented. In other embodiments, not shown in figure 10, in order to enhance lighting uniformity, some light sources face a side of the aerial drone 100 different from the side towards which the field of view of the imaging device 1 is oriented.

As shown in figure 10, the light sources are preferably arranged in two parallel rows along each arm of the aerial drone 100.

The light sources arranged along the arms of the self-propelled vehicle 100 may be mounted on PCBs 101 and are configured to emit light pulses at the same time and of the same duration as the light sources mounted on PCBs 2. This way, the lighting power of light pulses is increased, which allows capturing images which have higher quality and/or allows decreasing the exposure time of the imaging device 1 in the capture of an image.

In addition, it is advantageous to arrange the light sources in the arms in the sense that, since the arms are near the propellers, the current of air generated by the propellers contributes to dissipation of heat from the light sources.

The self-propelled vehicle 100 comprises a leg 103 arranged between the longitudinal centre of each arm and the end of the arm on top of which a motor 102 is arranged. The legs 103 may be advantageous for supporting the weight of the self-propelled vehicle 100 and for providing stability to the self-propelled vehicle 100 while it is not flying.

The self-propelled vehicle 100 further comprises a central board 105 attached to the four arms and to the imaging device 1. The imaging device 1 may be attached to an edge of the central board 105 by means of a rear plate 106, vibration dumping devices 108, an upper plate 107 and a lower plate (not shown). The upper plate 107 and the lower plate are preferably L-shaped plates.

The upper plate 107 may be screwed to the upper side of the housing 12 of the imaging device 1. The lower plate may be screwed to the lower side of the housing 12 of the imaging device 1. The upper plate 107 and the lower plate may be attached to the rear plate 106 by means of vibration dumping devices 108. The vibration dumping devices 108 are preferably made of rubber. The rear plate 106 is attached to board 105.

In some embodiments (not shown), the joint between the rear plate 106 and the upper plate 107 is such that it is achieved a particular angle of orientation of the rear plate 106 with respect to the upper plate 107 (for example, an angle of orientation different to the angle shown in figure 10). Thereby, it is achieved a particular angle of orientation of the imaging device 1 and of the light sources attached to the housing 12 with respect to the self-propelled vehicle 100, such that the imaging device 1 is able to capture images from a direction different to the direction shown in figure 10. For example, the orientation of the imaging device 1 may be a downward orientation, such that images captured by the imaging device 1 may show a bigger portion of a floor over which the self-propelled vehicle 100 is flying. Or for example, the orientation of the imaging device 1 may be an upward orientation, such that images captured by the imaging device 1 may show a bigger portion of a ceiling under which the self-propelled vehicle 100 is flying.

The board 105 may support a case 104 which houses electric components, such as the processing unit 4 or the onboard memory/memories for storing full resolution and/or low resolution images. The processing unit 4 may be electronically connected to the imaging device 1 by means of wires 109.

The self-propelled vehicle 100 comprises a battery connector 110 for supplying power to electric components of the self-propelled vehicle 100 (a.o. electric motors 102, processing unit 4, imaging device 1 and the light-emitting device).

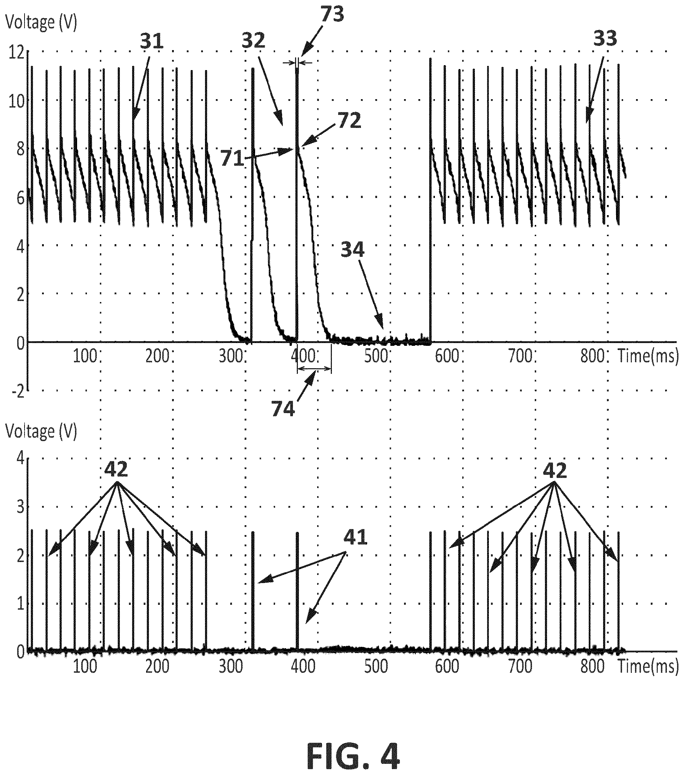

Figure 4 shows an exemplary distribution of switch-on lighting power pulses of a light emitting device 3. For example, the switch-on lighting power pulses may be sent by the trigger unit 21 to light sources 3. The trigger unit 21 may take the energy required for the switch-on lighting power pulses from a power source 5. In figure 4 it can be distinguished four zones corresponding to different time ranges. A first zone 31 and a third zone 33 wherein there are more switch-on lighting power pulses per unit of time and a second zone 32 wherein there are less switch-on lighting power pulses per unit of time. In figure 4, the light sources 3 are switched-on when the voltage increases above a particular voltage value (i.e. in each approximately vertical line).

As can be observed in figure 4, the first zone 31 starts at 0 ms and ends approximately at 240 ms. The lighting power pulses of the first zone 31 and of the third zone 33 have a period of 20 ms and reach a maximum voltage of approximately 11.0 V. The third zone 33 starts approximately at 590 ms and extends until the end of the graph, although in the practice it may last longer than shown in the figure 4. The light pulses emitted by the light sources 3 when subjected to the lighting power pulses of the first zone 31 or of the third zone 33 are suitable for capturing images having low resolution, because there is a high number of lighting power pulses (and hence of light pulses) per unit of time.

The second zone 32 presents two lighting power pulses at approximately 310 and 370 ms respectively. The second zone 32 has a duration of approximately 120 ms. During this time the processing unit 4 flushes the image sensor buffer and performs some configurations related to shutting-time for the following capture of a high-resolution image. The lighting power pulse at 310 ms of the second zone 32 reaches a maximum voltage of approximately 11.0 V. The lighting power pulse at 370 ms of the second zone 32 reaches a maximum voltage of approximately 11.0 V. The light pulses emitted by the light sources 3 when subjected to the lighting power pulses of the second zone 32 are suitable for capturing images having a full resolution, because there is a low number of lighting power pulses (and hence of light pulses) per unit of time. Thereby the light sources 3 can be kept switched on during a higher duration without burning, allowing more time for capturing each image (i.e. allowing a longer exposure time per image captured). These full resolution images may be used to generate 3D models of the surfaces of the surroundings of the self-propelled vehicle.

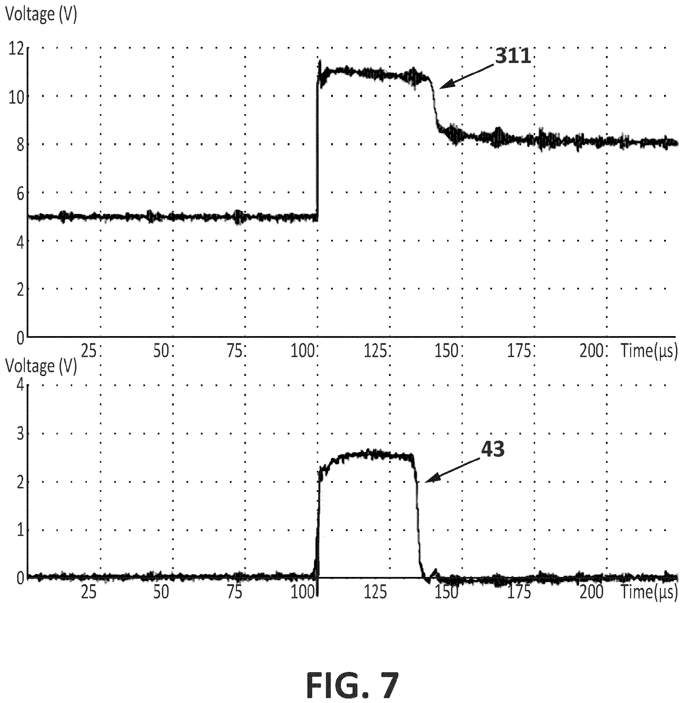

As explained above each switch-on lighting power pulse of the second zone 32 lasts longer than a switch-on lighting power pulse of the first or the third zone 31, 33. The light sources 3 generate light during the whole duration (or the whole width) of each lighting power pulse. Fig. 4 shows a first exemplary point 71 of a lighting power pulse wherein light sources 3 are switched-on and a second exemplary point 72 of the pulse wherein light sources 3 are switched-off. In addition, Fig. 4 shows a duration 73 of the light pulse generated by said lighting power pulse. As soon as the light sources are switched off in point 72, energy consumption is greatly reduced until the next lighting power pulse, because light sources 3 do not consume lighting energy, as they are switched off. From point 72, wherein the light sources 3 are switched off, until the next lighting power pulse, most of the energy consumption may be due to an unloading of a parasitic capacitance. These different portions of a lighting power pulse will be better appreciated in the reference to figure 7.

The fourth zone 34 in figure 4 extends approximately between 420 ms and 580 ms During the fourth zone 34 full resolution images captured in the second zone 32 are transferred to the processing unit 4 for storage in an onboard memory.

In addition, figure 4 shows trigger voltage pulses 41, 42 recurring at the same period as the lighting power pulses 32, 31, 33. As can be appreciated in figure 4, trigger pulses 41, 42 begin at almost the same time as light pulses begin and end at almost the same time as light pulses end. Trigger voltage pulses 41, 42 are applied by the imaging device 1 to a high-speed trigger unit 21 in order to cause the high-speed trigger unit to send a lighting power pulse 32, 31, 33. Trigger pulses 41 are suitable for capturing full resolution images. Trigger pulses 42 are suitable for capturing lower resolution images. It is shown in figure 4 that a trigger pulse 41 corresponding to the second zone 32 lasts longer than a trigger pulse 42 corresponding to the first or third zone 31, 33.

Figure 4 shows that each trigger pulse 41, 42 received by the high-speed trigger unit 21 starts at almost the same time as a lighting power pulse switches on light sources 3 as it can be observed that the beginning of a trigger pulse 41, 42 is almost colinear with the vertical portion of a lighting power pulse. In embodiments in which the high-speed trigger unit 21 receives the trigger voltage pulse 41, 42 once the exposure time has been initiated, a higher energy efficiency is achieved when compared to switching on light sources 3 before starting the exposure time.

In addition, figure 4 shows that trigger pulses 41 and 42 of the imaging device 1 reach a maximum value of approximately 2.5 V.

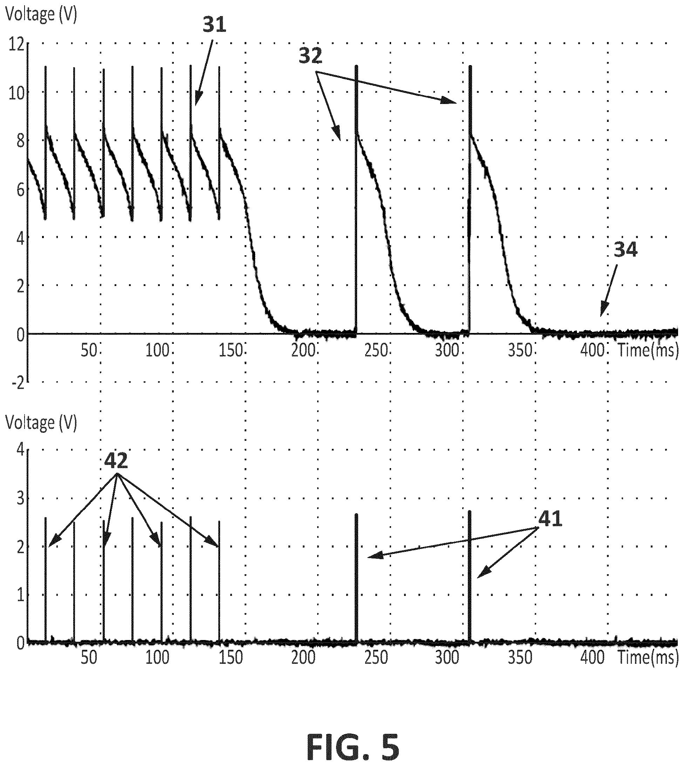

In figure 5 it can be distinguished two zones corresponding to different time ranges. A first zone 31 where there is a high number of lighting power pulses (and hence of light pulses) per unit of time and a second zone 32 where there is a low number of lighting power pulses (and hence of light pulses) per unit of time. The light sources 3 are switched-on when the voltage of the lighting power pulse increases above a particular voltage value (i.e. in each approximately vertical line).

As can be observed in figure 5, the first zone 31 starts at 0 ms and ends approximately at 150 ms. Each lighting power pulse of the first zone 31 reaches a maximum voltage of approximately 11.0 V. The second zone 32 starts approximately at 230 ms and ends approximately at 310 ms.

The light pulses emitted by the light sources 3 when subjected to the switch-on lighting power pulses of the first zone 31 are suitable for capturing images having a low resolution because there are many lighting power pulses (and hence light pulses) per unit of time.

The second zone 32 presents two light pulses at approximately 230 and 300 ms respectively. The switch-on lighting power pulse at 230 ms of the second zone 32 reaches a maximum voltage of approximately 11.0 V. The lighting power pulse at 300 ms of the second zone 32 reaches a maximum voltage of approximately 11.0 V.

The light pulses emitted by light sources 3 when subjected to the lighting power pulses of the second zone 32 are suitable for capturing images having full resolution, because there is a low number of lighting power pulses (and hence of light pulses) per unit of time. Thereby, the light sources 3 can be kept switched on during a longer period of time without burning, allowing more time to capture each image.

Figure 5 shows trigger pulses 41, 42 recurring at the same period as the lighting power pulses 32, 31, 33. As can be appreciated in figure 5, trigger pulses 41, 42 begin at almost the same time as light pulses begin and end at almost the same time as light pulses end. Trigger voltage pulses 41, 42 are applied by the imaging device 1 to a high-speed trigger unit 21 in order to cause the high-speed trigger unit to send a lighting power pulse 32, 31. Trigger pulses 41 are suitable for capturing full resolution images. Trigger pulses 42 are suitable for capturing lower resolution images. It is shown in figure 5 that the duration of a trigger pulse 41 of the second zone 32 is higher than the duration of a pulse 42 of the first zone 31.

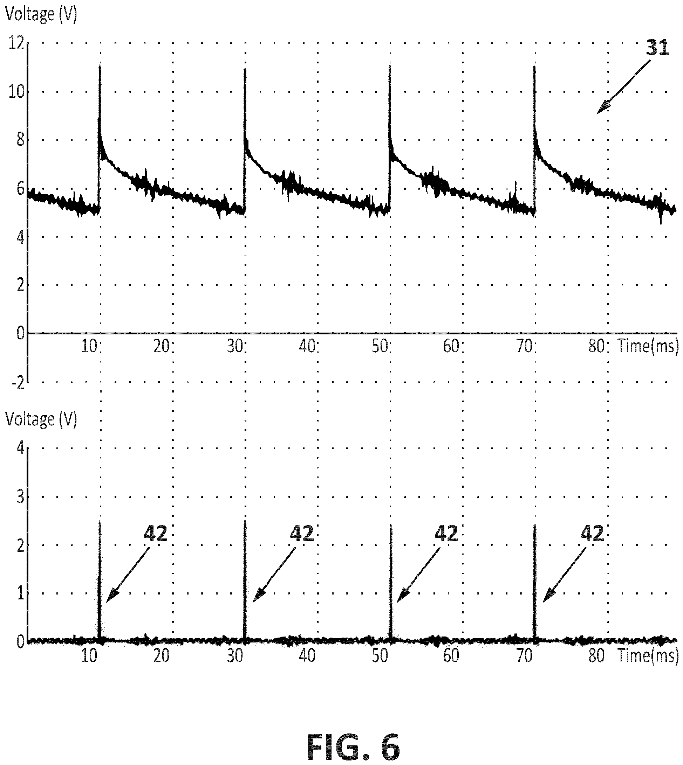

Figure 6 shows an enlarged view of zone 31 of figure 4 or of figure 5. Figure 6 discloses that each trigger pulse 42 received by the high-speed trigger unit 21 is initiated at almost the same time as a lighting power pulse switches on light sources 3. In embodiments in which the high-speed trigger unit 21 receives the trigger voltage pulse 42 once the exposure time has been initiated, a higher energy efficiency is achieved when compared to switching on the light sources 3 before initiating the exposure time.

In addition, figure 6 shows that the trigger pulses 42 received by the high-speed trigger unit 21 have a frequency of 50 pulses per second and the lighting power pulses of light sources 3 present the same frequency, 50 pulses per second. The trigger pulses of the shutter 1 reach a maximum value of 2.5 V.

Figure 7 shows an enlarged view of a lighting power pulse 311 of the first zone 31 of figure 6. The lighting power pulse 311 switches-on light sources 3 at approximately 100 µs, and switches-off the light sources 3 at approximately 140 µs. The trigger pulse 43 received by the high-speed trigger unit 21 is initiated at almost the same time as the lighting power pulse 311 switches-on the light sources 3. The imaging device 1 stops capturing the image before the electronics associated to the light emitting device are completely switched off. If the lighting power pulse 311 and the trigger pulse 43 shown in figure 7 took place at the frequency disclosed in figure 6, the light emitting device 3 would present a duty cycle of approximately 0.2%.

Energy consumed due to lighting takes place while the light sources 3 are switched on (e.g. in figure 7 between 100 and 140 µs. approximately). While the light sources 3 are switched off, electrical energy is required for part of the rest of the electronics involved (e.g. it may be required for unloading a parasitic capacitance), but while the light sources 3 are switched off said part of the electronics consumes an amount of energy which is negligible compared to the energy consumed while the light sources 3 are switched on.

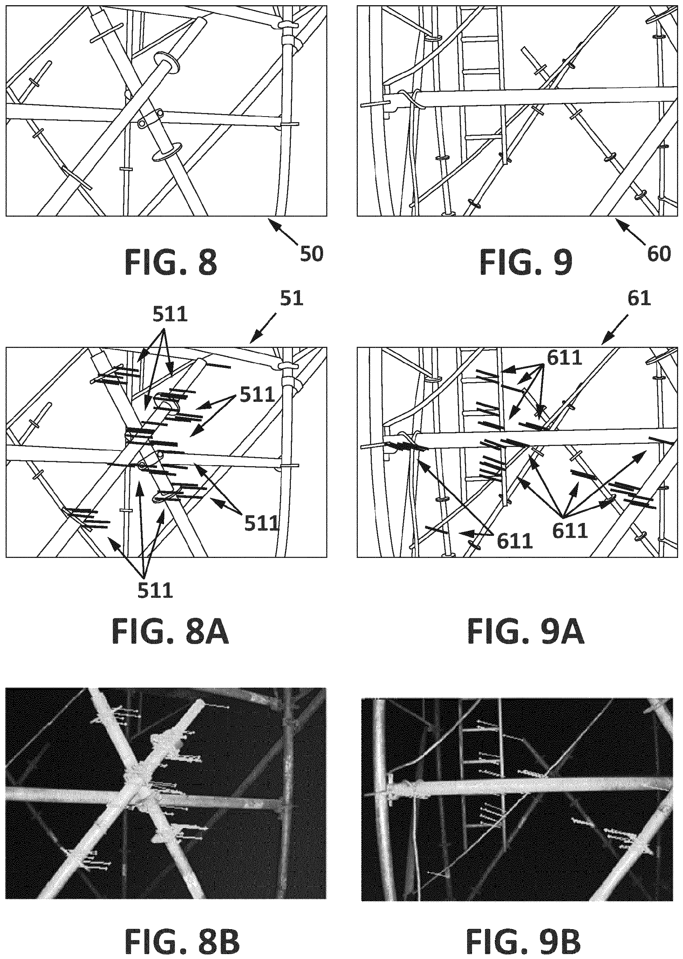

Figures 8 and 9 disclose schematic representations 50, 60 of images captured by the imaging device 1. Said images are examples of greyscale images having a low resolution, which are suitable for being quickly processed by the processing unit 4 on an execution of an image matching application.

After capturing an image, such as a greyscale image represented by 50 or a greyscale image represented by 60, the processing unit 4 looks for and identifies tie points 511, 611 within the captured image and saves the tie points 511, 611 in an onboard memory. Figures 8A and 9A respectively, show exemplary tie points 511, 611 which have been identified by the processing unit 4 in images represented by 50 and 60 respectively.

It can be observed in figures 8A and 9A that the tie points 511, 611 correspond to features of images represented by 50 and 60 respectively which have a high colour contrast (e.g., high grey shade contrast) with their adjacent contour and at the same time have a particular shape which is different from shapes adjacent to said features. The high contrast of grey shade may not be noticed in representations 50 and 60 if said representations are in black and white, however they may be appreciated in figures 8B and 9B respectively. This way processing unit 4 identifies features of the surroundings of the self-propelled vehicle which are represented by tie points 511, 611 and performs matching of tie points between subsequently captured images in order to calculate the position of the vehicle with respect to its surroundings, hence being able to navigate basing on said calculated position.

More specifically figure 8A shows a plurality of interconnected bars wherein the processing unit 4 has identified a first plurality of tie points 511 of crossing bars and a second plurality of tie points 511 of protrusions of bars.

Figure 9A shows a plurality of interconnected bars wherein the processing unit 4 has identified a first plurality of tie points 611 which correspond to regions wherein a bar changes direction, a second plurality of tie points 611 which correspond to regions wherein bars having different longitudinal directions intersect, a third plurality of tie points 611 of crossing bars and a fourth plurality of tie points 611 of protrusions of bars.

This way the same features of the surroundings of the self-propelled vehicle can be identified in consecutively captured images and hence the processing unit 4 of the self-propelled vehicle can calculate the position and relative movement of the self-propelled vehicle with respect to said features of the surroundings.

In this text, the term "comprises" and its derivations (such as "comprising", etc.) should not be understood in an excluding sense, that is, these terms should not be interpreted as excluding the possibility that what is described and defined may include further elements, steps, etc.

On the other hand, the invention is obviously not limited to the specific embodiment(s) described herein, but also encompasses any variations that may be considered by any person skilled in the art (for example, as regards the choice of materials, dimensions, components, configuration, etc.), within the general scope of the invention as defined in the claims.

## Claims

1. A self-propelled vehicle (100) comprising:
- a light emitting device for emitting light pulses; and
- an imaging device (1) for capturing images of the surroundings of the self-propelled vehicle (100), the imaging device (1) comprising light sensors and a shutter; wherein
- the light emitting device is coordinated with the shutter of the imaging device (1), such that an image (50) of the surroundings of the self-propelled vehicle (100) is captured by the imaging device (1) during at least part of the duration of a light pulse;
- the light emitting device is configured to emit light pulses wherein each light pulse has a duration of less than 5000 µs; and
- the self-propelled vehicle is an aerial drone;
**characterized in that**
the imaging device (1) is configured to convert light to electrical signals without using any electrical amplifier to provide gain to image signals generated by the light sensors of the imaging device, and **in that**
the light pulses are light pulses of high power in order to reduce image noise in the images captured by the imaging device (1).

2. The self-propelled vehicle (100) of claim 1, wherein each light pulse has a duration of less than 2000 µs, and preferably wherein each light pulse has a duration of more than 20 µs.

3. The self-propelled vehicle (100) of any one of the previous claims, wherein the self-propelled vehicle (100) is configured to adapt the duration of the light pulses, during movement of the self-propelled vehicle (100), to light reflected by objects located within the field of view of the imaging device (1), the duration being adapted according to at least one image (50) of the objects previously captured by the imaging device (1).

4. The self-propelled vehicle (100) of any one of the previous claims, wherein the self-propelled vehicle (100) is configured to emit light pulses with a duty cycle of between 0.05% and 10%.

5. The self-propelled vehicle (100) of any one of the previous claims, wherein the imaging device (1) is configured to capture at least 50 images (50) per second.

6. The self-propelled vehicle (100) of any one of the previous claims, wherein the self-propelled vehicle (100) is configured to be guided according to relative positions between a first plurality of tie points (511) of an image (50) captured by the imaging device (1) and a second plurality of tie points (511) of another image (50) captured by the imaging device (1), wherein the first plurality of tie points (511) are visual representations of locations of the surroundings of the self-propelled vehicle (100) and the second plurality of tie points (511) are visual representations of the locations of the surroundings of the self-propelled vehicle (100) represented by the first plurality of tie points (511).

7. The self-propelled vehicle (10) of any one of the previous claims, wherein the self-propelled vehicle (100) is configured to perform matching of tie points (511) present in different images (50), wherein the tie points (511) are identifiable within images (50) captured during pulses of unpatterned light.

8. The self-propelled vehicle (100) of any one of the previous claims, wherein the shutter of the imaging device (1) is a global shutter.

9. The self-propelled vehicle (100) of any one of the previous claims, wherein the imaging device (1) comprises an image sensor (14) comprising an array of sensors of light and the imaging device (1) is configured to bin adjacent sensors of light of the array of sensors of light for reducing pixel resolution of a captured image (50).

10. The self-propelled vehicle (100) of any one of the previous claims, wherein the light emitting device comprises a light diffuser.

11. The self-propelled vehicle (100) of any one of the previous claims, wherein:
- the imaging device (1) comprises an imaging lens, and
- the light emitting device comprises a plurality of light sources (3), each light source (3) oriented in a direction which forms an angle of between 35° and 55° with respect to the optical axis of the imaging lens (11) of the imaging device (1).

12. A method of capturing images (50) from a self-propelled vehicle (100), the method comprising:
- emitting light pulses towards a target, wherein each light pulse has a duration of less than 5000 µs; and
- capturing images (50) of the target, the target being located in the surroundings of the self-propelled vehicle (100); wherein
- the images are captured by an imaging device comprising light sensors;
- the step of capturing images (50) of the target is coordinated with the light pulses emitted towards the target such that an image (50) is captured during at least part of the duration of a light pulse; and
- the self-propelled vehicle is an aerial drone;
**characterized in that**
light is converted to electrical signals by the imaging device without using any electrical amplifier to provide gain to image signals generated by the light sensors of the imaging device, and **in that**
the light pulses are light pulses of high power in order to reduce image noise in the images captured by the imaging device (1).

13. The method of claim 12, which further comprises a step of calculating vehicle positioning information for providing guiding instructions to the self-propelled vehicle (100), wherein the step of calculating vehicle positioning information comprises processing the captured images (50) according to an image matching algorithm.

14. The method according to any one of claims 12-13, wherein the self-propelled device (100) is according to any of claims 1-11.

## Patentansprüche

1. Selbstangetriebenes Fahrzeug (100) umfassend:
- eine Licht emittierende Vorrichtung zum Emittieren von Lichtimpulsen; und
- eine Abbildungsvorrichtung (1) zum Erfassen von Bildern der Umgebung des selbstangetriebenen Fahrzeugs (100), wobei die Abbildungsvorrichtung (1) Lichtsensoren und eine Blende umfasst; wobei
- die lichtemittierende Vorrichtung mit der Blende der Abbildungsvorrichtung (1) koordiniert ist, so dass ein Bild (50) der Umgebung des selbstangetriebenen Fahrzeugs (100) von der Abbildungsvorrichtung (1) zumindest während eines Teils der Dauer eines Lichtimpulses aufgenommen wird;
- die lichtemittierende Vorrichtung so konfiguriert ist, dass sie Lichtimpulse emittiert, wobei jeder Lichtimpuls eine Dauer von weniger als 5000 µs hat; und
- das selbstangetriebene Fahrzeug eine Luftdrohne ist;
**dadurch gekennzeichnet, dass**
die Abbildungsvorrichtung (1) so konfiguriert ist, dass sie Licht in elektrische Signale umwandelt, ohne einen elektrischen Verstärker zu verwenden, um Bildsignale, die von den Lichtsensoren der Abbildungsvorrichtung erzeugt werden, zu verstärken, und dadurch, dass die Lichtimpulse Lichtimpulse hoher Leistung sind, um das Bildrauschen in den von der Abbildungsvorrichtung (1) aufgenommenen Bildern zu verringern.

2. Selbstangetriebenes Fahrzeug (100) nach Anspruch 1, wobei jeder Lichtimpuls eine Dauer von weniger als 2000 µs und vorzugsweise jeder Lichtimpuls eine Dauer von mehr als 20 µs hat.

3. Selbstangetriebenes Fahrzeug (100) nach einem der vorhergehenden Ansprüche, wobei das selbstangetriebene Fahrzeug (100) so konfiguriert ist, dass es die Dauer der Lichtimpulse während der Bewegung des selbstangetriebenen Fahrzeugs (100) an das Licht anpasst, das von Objekten reflektiert wird, die sich im Sichtfeld der Abbildungsvorrichtung (1) befinden, wobei die Dauer in Abhängigkeit von mindestens einem Bild (50) der Objekte angepasst wird, das zuvor von der Abbildungsvorrichtung (1) aufgenommen wurde.

4. Selbstangetriebenes Fahrzeug (100) nach einem der vorhergehenden Ansprüche, wobei das selbstangetriebene Fahrzeug (100) so konfiguriert ist, dass es Lichtimpulse mit einem Tastverhältnis zwischen 0,05% und 10% aussendet.

5. Selbstangetriebenes Fahrzeug (100) nach einem der vorhergehenden Ansprüche, wobei die Abbildungsvorrichtung (1) so konfiguriert ist, dass sie mindestens 50 Bilder (50) pro Sekunde aufnimmt.

6. Selbstangetriebenes Fahrzeug (100) nach einem der vorhergehenden Ansprüche, wobei das selbstangetriebene Fahrzeug (100) so konfiguriert ist, dass es gemäß relativen Positionen zwischen einer ersten Mehrzahl von Verbindungspunkten (511) eines von der Abbildungsvorrichtung (1) aufgenommenen Bildes (50) und einer zweiten Mehrzahl von Verbindungspunkten (511) eines anderen von der Abbildungsvorrichtung (1) aufgenommenen Bildes (50) geführt wird, wobei die erste Mehrzahl von Verbindungspunkten (511) visuelle Darstellungen von Orten der Umgebung des selbstangetriebenen Fahrzeugs (100) sind und die zweite Mehrzahl von Verbindungspunkten (511) visuelle Darstellungen der Orte der Umgebung des selbstangetriebenen Fahrzeugs (100) sind, die durch die erste Mehrzahl von Verbindungspunkten (511) dargestellt werden.

7. Selbstangetriebenes Fahrzeug (10) nach einem der vorhergehenden Ansprüche, wobei das selbstangetriebene Fahrzeug (100) so konfiguriert ist, dass es einen Abgleich von Verbindungspunkten (511) durchführt, die in verschiedenen Bildern (50) vorhanden sind, wobei die Verbindungspunkte (511) in Bildern (50) identifizierbar sind, die während Impulsen von ungemustertem Licht aufgenommen wurden.

8. Selbstangetriebenes Fahrzeug (100) nach einem der vorhergehenden Ansprüche, wobei die Blende der Abbildungsvorrichtung (1) ein Globalblende ist.

9. Selbstangetriebenes Fahrzeug (100) nach einem der vorhergehenden Ansprüche, wobei die Abbildungsvorrichtung (1) einen Bildsensor (14) umfasst, der ein Array von Lichtsensoren umfasst, und die Abbildungsvorrichtung (1) so konfiguriert ist, dass sie benachbarte Lichtsensoren des Arrays von Lichtsensoren gruppieren kann, um die Pixelauflösung eines aufgenommenen Bildes (50) zu verringern.

10. Selbstangetriebenes Fahrzeug (100) nach einem der vorhergehenden Ansprüche, wobei die lichtemittierende Vorrichtung einen Lichtdiffusor umfasst.

11. Selbstangetriebenes Fahrzeug (100) nach einem der vorhergehenden Ansprüche, wobei:
- die Abbildungsvorrichtung (1) eine Abbildungslinse umfasst, und
- die lichtemittierende Vorrichtung eine Mehrzahl von Lichtquellen (3) umfasst, wobei jede Lichtquelle (3) in einer Richtung ausgerichtet ist, die einen Winkel zwischen 35° und 55° in Bezug auf die optische Achse der Abbildungslinse (11) der Abbildungsvorrichtung (1) bildet.

12. Verfahren zum Erfassen von Bildern (50) von einem selbstangetriebenen Fahrzeug (100), wobei das Verfahren umfasst:
- Aussenden von Lichtimpulsen auf ein Ziel, wobei jeder Lichtimpuls eine Dauer von weniger als 5000 µs hat; und
- Erfassen von Bildern (50) des Ziels, wobei sich das Ziel in der Umgebung des selbstangetriebenen Fahrzeugs (100) befindet; wobei
- die Bilder durch eine Abbildungsvorrichtun, die Lichtsensoren umfasst, erfasst werden;
- der Schritt des Erfassens von Bildern (50) des Ziels mit den auf das Ziel emittierten Lichtimpulsen koordiniert wird, so dass ein Bild (50) zumindest während eines Teils der Dauer eines Lichtimpulses erfasst wird; und
- das selbstangetriebene Fahrzeug eine Luftdrohne ist;
**dadurch gekennzeichnet, dass**
Licht durch die Abbildungsvorrichtung in elektrische Signale umgewandelt wird, ohne dass ein elektrischer Verstärker verwendet wird, um die von den Lichtsensoren der Abbildungsvorrichtung erzeugten Bildsignale zu verstärken, und dass die Lichtimpulse Lichtimpulse mit hoher Leistung sind, um das Bildrauschen in den von der Abbildungsvorrichtung (1) aufgenommenen Bildern zu verringern.

13. Verfahren nach Anspruch 12, das ferner einen Schritt des Berechnens von Fahrzeugpositionierungsinformationen zum Bereitstellen von Führungsanweisungen für das selbstangetriebene Fahrzeug (100) umfasst, wobei der Schritt des Berechnens von Fahrzeugpositionierungsinformationen das Verarbeiten der aufgenommenen Bilder (50) gemäß einem Bildvergleichalgorithmus umfasst.

14. Verfahren nach einem der Ansprüche 12-13, wobei die selbstangetriebene Vorrichtung (100) eine nach einem der Ansprüche 1-11 ist.

## Revendications

1. Véhicule autopropulsé (100) comprenant :
- un dispositif électroluminescent pour émettre des impulsions lumineuses ; et
- un dispositif d'imagerie (1) pour capturer des images de l'environnement du véhicule autopropulsé (100), le dispositif d'imagerie (1) comprenant des capteurs de lumière et un obturateur ; dans lequel
- le dispositif électroluminescent est coordonné avec l'obturateur du dispositif d'imagerie (1), de sorte qu'une image (50) de l'environnement du véhicule autopropulsé (100) soit capturée par le dispositif d'imagerie (1) au cours d'au moins une partie de la durée d'une impulsion lumineuse ;
- le dispositif électroluminescent est configuré pour émettre des impulsions lumineuses dans lequel chaque impulsion lumineuse a une durée de moins de 5000 µs ; et
- le véhicule autopropulsé est un drone aérien ;
**caractérisé en ce que**
le dispositif d'imagerie (1) est configuré pour convertir une lumière en signaux électriques sans utiliser d'amplificateur électrique pour fournir un gain à des signaux d'image générés par les capteurs de lumière du dispositif d'imagerie, et **en ce que**
les impulsions lumineuses sont des impulsions lumineuses de grande puissance afin de réduire un bruit d'image dans les images capturées par le dispositif d'imagerie (1).

2. Véhicule autopropulsé (100) selon la revendication 1, dans lequel chaque impulsion lumineuse a une durée de moins de 2000 µs, et de préférence dans lequel chaque impulsion lumineuse a une durée de plus de 20 µs.

3. Véhicule autopropulsé (100) selon l'une quelconque des revendications précédentes, dans lequel le véhicule autopropulsé (100) est configuré pour adapter la durée des impulsions lumineuses, au cours du déplacement du véhicule autopropulsé (100), à une lumière réfléchie par des objets situés à l'intérieur du champ de vision du dispositif d'imagerie (1), la durée étant adaptée selon au moins une image (50) des objets précédemment capturés par le dispositif d'imagerie (1).

4. Véhicule autopropulsé (100) selon l'une quelconque des revendications précédentes, dans lequel le véhicule autopropulsé (100) est configuré pour émettre des impulsions lumineuses avec un cycle de service entre 0,05 % et 10 %.

5. Véhicule autopropulsé (100) selon l'une quelconque des revendications précédentes, dans lequel le dispositif d'imagerie (1) est configuré pour capturer au moins 50 images (50) par seconde.

6. Véhicule autopropulsé (100) selon l'une quelconque des revendications précédentes, dans lequel le véhicule autopropulsé (100) est configuré pour être guidé en fonction de positions relatives entre une première pluralité de points de raccordement (511) d'une image (50) capturée par le dispositif d'imagerie (1) et une seconde pluralité de points de raccordement (511) d'une autre image (50) capturée par le dispositif d'imagerie (1), dans lequel la première pluralité de points de raccordement (511) sont des représentations visuelles d'emplacements de l'environnement du véhicule autopropulsé (100) et la seconde pluralité de points de raccordement (511) sont des représentations visuelles des emplacements de l'environnement du véhicule autopropulsé (100) représentés par la première pluralité de points de raccordement (511).

7. Véhicule autopropulsé (10) selon l'une quelconque des revendications précédentes, dans lequel le véhicule autopropulsé (100) est configuré pour réaliser la mise en correspondance de points de raccordement (511) présents dans différentes images (50), dans lequel les points de raccordement (511) sont identifiables à l'intérieur d'images (50) capturées au cours d'impulsions d'une lumière sans motif.

8. Véhicule autopropulsé (100) selon l'une quelconque des revendications précédentes, dans lequel l'obturateur du dispositif d'imagerie (1) est un obturateur global.

9. Véhicule autopropulsé (100) selon l'une quelconque des revendications précédentes, dans lequel le dispositif d'imagerie (1) comprend un capteur d'image (14) comprenant un réseau de capteurs de lumière et le dispositif d'imagerie (1) est configuré pour compartimenter des capteurs adjacents de lumière du réseau de capteurs de lumière pour réduire une résolution de pixels d'une image capturée (50).

10. Véhicule autopropulsé (100) selon l'une quelconque des revendications précédentes, dans lequel le dispositif électroluminescent comprend un diffuseur de lumière.

11. Véhicule autopropulsé (100) selon l'une quelconque des revendications précédentes, dans lequel :
- le dispositif d'imagerie (1) comprend une lentille d'imagerie, et
- le dispositif électroluminescent comprend une pluralité de sources de lumière (3), chaque source de lumière (3) étant orientée dans une direction qui forme un angle entre 35° et 55° par rapport à l'axe optique de la lentille d'imagerie (11) du dispositif d'imagerie (1).

12. Procédé de capture d'images (50) depuis un véhicule autopropulsé (100), le procédé comprenant :
- l'émission d'impulsions lumineuses vers une cible, dans lequel chaque impulsion lumineuse a une durée de moins de 5000 µs ; et
- la capture d'images (50) de la cible, la cible étant située dans l'environnement du véhicule autopropulsé (100) ; dans lequel
- les images sont capturées par un dispositif d'imagerie comprenant des capteurs de lumière ;
- l'étape de la capture d'images (50) de la cible est coordonnée avec les impulsions lumineuses émises vers la cible de sorte qu'une image (50) soit capturée au cours d'au moins une partie de la durée d'une impulsion lumineuse ; et
- le véhicule autopropulsé est un drone aérien ;
**caractérisé en ce que**
une lumière est convertie en signaux électriques par le dispositif d'imagerie sans utiliser d'amplificateur électrique pour fournir un gain à des signaux d'image générés par les capteurs de lumière du dispositif d'imagerie, et **en ce que**
les impulsions lumineuses sont des impulsions lumineuses de grande puissance afin de réduire un bruit d'image dans les images capturées par le dispositif d'imagerie (1).

13. Procédé selon la revendication 12, comprenant en outre une étape de calcul d'informations de positionnement de véhicule pour fournir des instructions de guidage au véhicule autopropulsé (100), dans lequel l'étape de calcul d'informations de positionnement de véhicule comprend le traitement des images capturées (50) selon un algorithme de mise en correspondance d'image.

14. Procédé selon l'une quelconque des revendications 12 et 13, dans lequel le dispositif autopropulsé (100) est selon l'une quelconque des revendications 1 à 11.
